# EUROPEAN PATENT APPLICATION

(11) **EP 1 508 707 A1**
(43) Date of publication of application: **23.02.2005**
(21) Application number: 03723327.7
(22) Date of filing: 12.05.2003
(51) Int. Cl.: F16C 3/02, F16F 15/02, F16F 15/10, F16H 25/24

(54) **SHAFT MEMBER WITH VIBRATION DAMPING FUNCTION**

(30) Priority: 14.05.2002 JP 2002138725
(71) Applicant: THK Co., Ltd., Shinagawa-ku, Tokyo 141-8503 (JP)
(72) Inventor: MICHIOKA, Hidekazu, c/o THK Co., Ltd., Shinagawa-ku, Tokyo 141-8503 (JP); NIWA, Hiroshi, c/o THK Co., Ltd., Shinagawa-ku, Tokyo 141-8503 (JP); TAMANO, Masahiko, Ichishi-gun, Mie 515-2334 (JP)
(74) Representative: Grünecker, Kinkeldey, Stockmair & Schwanhäusser Anwaltssozietät
(86) International application number: PCT/JP2003/005879
(87) International publication number: WO 2003/095851

(57) **Abstract**

Provided is a shaft member capable of minimizing the occurrence of noise by positively attenuating vibration acting on a metal shaft member having spline grooves and spiral grooves axially formed therein. To attain such an object, a shaft member includes a metal shaft main body having a hollow portion and a ceramic material serving as a vibration absorbing member which fills the hollow portion of the shaft body with no gaps. The ceramic material is filled into the hollow portion of the shaft main body in a powder, granular, or fluid state, and formed within the hollow portion into a shape matching the hollow portion.

## Description

### Technical Field

The present invention relates to a shaft member made of metal, in which a spline groove, a helical groove, and the like are formed along an axial direction thereof. In particular, the present invention relates to improvements in order to attenuate vibrations or noise at an early stage.

### Background Art

For example, there are known conventional ball splines that include a spline shaft in which ball rolling grooves are formed along an axial direction, and a spline nut that fits together with the spline shaft through endlessly circulating balls, in which the spline nut is free to move in the periphery of the spline shaft along the axial direction and in which torque transmission between the spline shaft and the spline nut is possible.

Further, there are known conventional ball screw devices that include a screw shaft with helical ball rolling grooves formed at a predetermined pitch therein, and a screw nut that fits together with the screw shaft through endlessly circulating balls, in which the screw nut moves in a longitudinal direction according to rotation of the screw shaft.

However, the following problem may occur when using the ball screw devices, the ball splines, or the like. The balls circulate endlessly according to relative motion between the nut and the spline shaft or the screw shaft. This invites a result in which the balls vigorously impact the shaft member when the nut moves at high speed because the balls separate from and contact the shaft members in turn. The shaft members are vibrated due to the impacts, and a grating oscillatory sound develops.

Further, these types of ball screw devices and ball splines are often used in the Z-axis of industrial robots and the like. However, in order to position the Z-axis with high precision, it is necessary to attenuate vibrations that act on the spline shaft or the screw shaft at an early state. If the settling time for the vibrations to subside is long, there are problems in that the tact time for completing one work unit becomes longer, and the manufacturing efficiency decreases.

Conventionally, a hollow shaft disclosed in JP 62-103133 A is known as a shaft member made in view of problems like those described above. A circumferential wall of the hollow shaft is formed by laminating an intermediate layer of a ceramic material between an inner layer and an outer layer that are made of a metal; and does not easily transmit vibrations.

There are problems, however, in that the hollow shaft with the laminate structure is laborious to fabricate, and manufacturing costs pile up. Further, vibrations acting on the shaft member differ according to the shape and the intended application of the shaft member itself. In order to effectively attenuate the vibrations, it is necessary to optimize the laminated intermediate layer according to vibration frequency and the like. Regarding this point, the intermediate layer is formed thinly with the laminated hollow shaft. Accordingly, there is a problem in that there is little breadth in the design and selection of the intermediate layer, and it is difficult to effectively attenuate vibrations for all types of applications.

### Disclosure of the Invention

The present invention has been made in view of problems like those described above. An object of the present invention is to provide a shaft member capable of positively attenuating vibrations acting on the shaft member, and capable of suppressing generation of noise as much as possible.

In order to achieve the objects described above, the shaft member of the present invention is characterized by including a shaft main body made of metal and provided with a hollow portion, and a ceramic material serving as a vibration absorbing member and filling the hollow portion with no gaps.

While the ceramic material may be formed into a predetermined shape and then pushed into the hollow portion of the shaft member under pressure considering the ease of assembling of the shaft member, it is preferable that the ceramic material be filled within the hollow portion of the shaft member in a powder, granular, or fluid state, and be formed within the hollow portion into a shape that conforms to the hollow portion.

In addition, it is preferable that the ceramic material be a hydraulic composition having a hydraulic powder and a non-hydraulic powder as its main components.

### Brief Description of the Drawings

Fig. 1 is a front view that shows an embodiment of a tie rod (shaft member) applying the present invention.
Fig. 2 is a schematic view that shows a configuration of a steering apparatus using the tie rod shown in Fig. 1.
Fig. 3 is a cross sectional view taken along a line segment III-III of Fig. 1.
Fig. 4 is a perspective view that shows a ball screw spline in which the present invention is applied to an output shaft.
Fig. 5 is a cross sectional view that shows an example of constructing a robot arm using the ball screw spline shown in Fig. 4.
Fig. 6 is a surface view that shows an embodiment of a screw shaft of a ball screw device applying the present invention.

### [Description of Symbols]

### 8 ... tie rod (shaft member), 8a ... hollow portion, 8b ... shaft main body, 8c ... vibration absorbing member

### Best Modes for carrying out the Invention

A shaft member provided with a vibration damping function according to the present invention is explained in detail below based on the appended drawings.

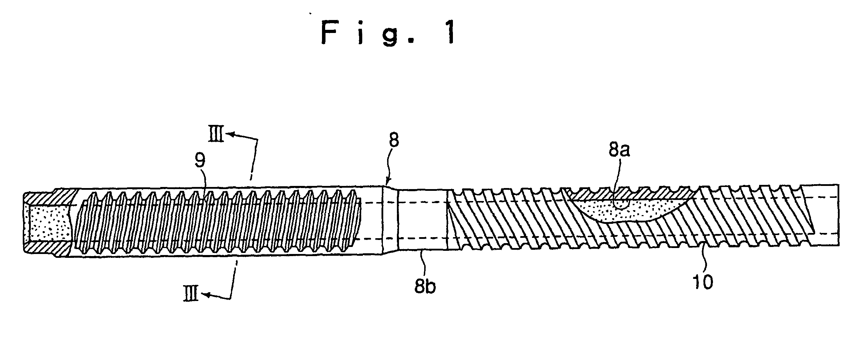

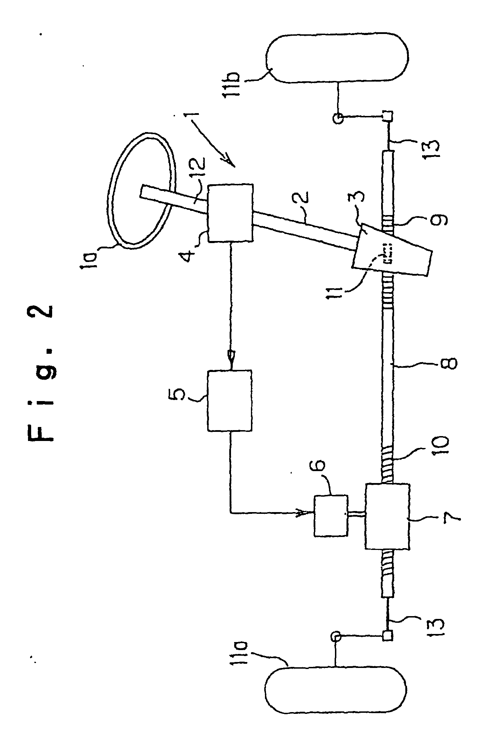

Fig. 1 is a drawing that shows an example of a tie rod 8 used in a power steering apparatus of a vehicle. As shown in Fig. 2, the power steering apparatus to which the tie rod 8 is applied includes a steering system 1, a rack and pinion mechanism 3 that is connected to an output shaft 2 of the steering system 1, steering torque detecting means 4 for detecting a steering torque of the steering system 1, controlling means 5 for generating a control signal based on a signal detected by the steering torque detecting means 4, an electric motor 6 that generates an auxiliary torque in accordance with the steering torque based on the control signal of the controlling means 5, and a steering ball screw 7 that threadedly engages with the tie rod and is imparted with rotation by the electric motor 6. When a steering wheel 1a is operated, the tie rod 8 is moved linearly in an axial direction by the rack and pinion mechanism 3 and the steering ball screw 7, and vehicle wheels 11a and 11b that are connected to both ends of the tie rod 8 are steered.

The steering system 1 comprises the steering wheel 1a, an input shaft 12 that is connected to the steering wheel 1a, and the output shaft 2 that is connected to the input shaft. The steering torque detecting means 4 is adapted to detect steering torque, that is, a relative angle of twist between the input shaft 12 and the output shaft 2.

Further, the rack and pinion mechanism 3 includes a pinion gear 11 that is connected to a distal end of the output shaft 2 through a universal joint, and rack teeth 9 that are formed in the tie rod 8 and mesh with the pinion gear 11. When the steering wheel 1a is rotated, rotation of the steering wheel 1a is transmitted to the pinion gear 11 through the input shaft 12 and the output shaft 2. The pinion gear 11 then pushes the tie rod 8, which has the rack teeth 9, in an axial direction.

The tie rod 8 is a hollow shaft provided with a hollow portion 8a. The rack teeth 9 are formed at one end side of the tie rod 8. A helical ball rolling groove 10 is formed at the other end side of the tie rod 8. A steering ball screw 7 threadedly engages with the ball rolling groove 10 through a plurality of balls that roll in the ball rolling groove 10. The vehicle wheels 11a and 11b are connected to both ends of the tie rod 8 through a pair of ball joints 13, 13, respectively. When the tie rod 8 moves linearly in the axial direction due to operation of the steering wheel 1a, the linear motion is transmitted to the vehicle wheels 11a and 11b, through the ball joints 13, as rocking motion, thus performing steering of the vehicle wheels 11a and 11b.

In addition, in order to smoothly move the tie rod 8 in the axial direction according to operation of the steering wheel 1a, the electric motor 6 generates an auxiliary torque in accordance with the steering torque. The steering ball screw 7 is rotated in a predetermined direction by the auxiliary torque. The tie rod 8 is thus pushed in the axial direction by not only the rack and pinion mechanism when the steering wheel 1a is operated, but also by the steering ball screw 7.

On the other hand, the tie rod 8 is one in which the rack teeth 9 and the ball rolling groove 10 are formed in an outer circumferential surface of the metallic shaft main body 8b that is provided with the hollow portion. The rack teeth 9 and the ball rolling groove 10 are formed by cutting or by component rolling. While the rack teeth 9 and the ball rolling groove 10 may be formed in a single shaft main body 8b, it is also possible to form a shaft main body that is provided with a hollow portion by welding together a hollow shaft in which rack teeth are formed and a hollow shaft in which a ball rolling groove is formed.

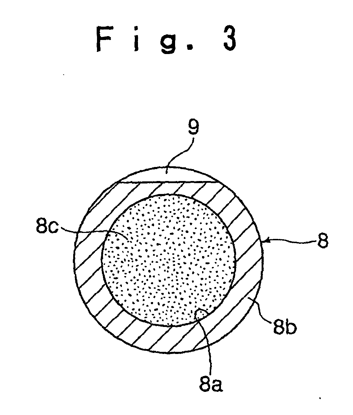

Fig. 3 is a diagram that shows a cross section of the tie rod 8 in the direction perpendicular to the axial direction. A vibration absorbing member 8c is packed into the hollow portion 8a of the tie rod 8, without gaps, in this embodiment. The vibration absorbing member 8c firmly adheres to an inner circumference of the shaft main body 8b. The vibration absorbing member 8c may be integrated with the shaft main body 8b by press fitting a member formed in a cylindrical shape into the hollow portion 8a of the shaft main body 8b. However, considering the labor involved in forming the vibration absorbing member 8c itself in a cylindrical shape with good precision, and considering that unevennesses may exist within the hollow portion 8a of the shaft main body 8b, and the like, it is preferable that the vibration absorbing member 8c be filled within the hollow portion of the shaft member 8b in a powder, granular, or fluid state, and formed within the hollow portion 8a into a shape conforming to the hollow portion 8a.

In view of the above, in this embodiment, a hydraulic composition having a hydraulic powder and a non-hydraulic powder as main constituents (Z-ma manufactured by Sumitomo Osaka Cement) is filled within the hollow portion of the shaft main body with applied pressure. The vibration absorbing member, made from a ceramic material, is integrated with the shaft main body by performing hydrothermal synthesis on the filled hydraulic composition. The term hydraulic powder as used here means a powder that hardens with water. For example, calcium silicate compound powder, calcium aluminate compound powder, calcium fluoroaluminate compound powder, calcium sulfur aluminate compound powder, calcium aluminoferrite compound powder, calcium phosphate compound powder, semi-hydrated or anhydrous gypsum, self-hardening calcium oxide, and compounds of a mixture of two or more of the aforementioned powders can be used. A powder such as Portland cement can be given, for example, as a typical powder.

Further, the term non-hydraulic powder means a powder that does not harden by itself, even when there is contact with water. Non-hydraulic powders also include powders whose components are eluted out in an alkaline state, an acidic state, or under a high pressure vapor atmosphere, and react with other already eluted components, forming products. By adding this type of non-hydraulic powder, it becomes possible to increase the filling ratio when forming a formed product, to reduce the void ratio of the formed product obtained, and to increase the dimensional stability of the formed product. Calcium hydroxide powder, gypsum dihydrate powder, calcium carbonate powder, slag powder, fly ash powder, silica powder, clay powder, silica fume powder, and the like can be given as typical examples of non-hydraulic powders.

The weight composition of the non-hydraulic powder is from 10 to 50% by weight of the mixed powder composed of the hydraulic powder and the non-hydraulic powder, preferably from 25 to 35% by weight. If the weight composition is less than 10%, the filling ratio becomes low, and if the weight composition exceeds 50%, the strength and the filling ratio become low. Neither of the weight compositions is desirable for its adverse influence on the properties obtained after formation and hardening. For example, defects may occur during machining, and dimensional stability may be adversely affected. Considering the ease of machining, it is therefore preferable to regulate the weight composition of the non-hydraulic powder so that the filling ratio does not become too low.

Specific processes for integrating the shaft main body and the vibration absorbing member are given. First, a mixture obtained by adding 30 parts by weight, or less than the theoretical hydration amount, of water to 100 parts by weight of a mixed powder of a hydraulic powder and a non-hydraulic powder is mixed into a mixed powder composed of a hydraulic powder such as Portland Cement, a non-hydraulic powder such as silica fume, and other additives. It is preferable to use a mixing method or a mixing machine capable of imparting a strong shear force to the formation mixture during mixing.

Next, the formation mixture thus obtained is filled into the hollow portion of the shaft main body with pressure. Curing is performed when filling is complete. Curing is performed at room temperature or under high temperature and high pressure. The curing time changes according to the curing temperature.

The vibration absorbing member made from the ceramic material can thus fill the inside of the hollow portion of the shaft member without gaps, regardless of the shape of the hollow portion.

Table 1 below shows results on the measured natural frequency, and on the measured frequency response characteristics under forced vibration, for a hollow shaft and for a hollow shaft with the vibration absorbing member filling the inside of the hollow shaft, and the damping ratio and the gain difference (dB) at this time. As shown in Table 1, it was verified that the damping ratio of the hollow shaft having the ceramic vibration absorbing member filled therein without any gaps is large compared to the damping ratio of the hollow shaft as it is.

**Table 1**

| | | Hollow shaft | Absorbing member provided |
|---|---|---|---|
| 1 | Natural frequency (Hz) | 421 | 390 |
| | Damping ratio | 0.0025 | 0.0145 |
| | Gain difference (dB) | 0 | -17.6 |
| 2 | Natural frequency (Hz) | 1136 | 1079 |
| | Damping ratio | 0.0008 | 0.0349 |
| | Gain difference (dB) | 0 | -35.0 |

Further, as described above, the void ratio and the hardness of the ceramic material that fills the hollow shaft can be freely regulated by suitably changing the weight composition of the non-hydraulic powder and by suitably changing the pressure applied during filling. Accordingly, it is also possible to impart damping performance to the shaft member according to the shape of the hollow shaft and according to the frequency that acts on the hollow shaft.

Consequently, even if vibrations occur in the tie rod due to engaging of the pinion gear and the rack teeth due to operation of the steering wheel, or due to rotation of the steering ball screw, the vibrations are attenuated at an early stage according to the steering apparatus of this embodiment. It thus becomes possible to suppress the propagation of noise that accompanies this vibration within a passenger compartment of the vehicle.

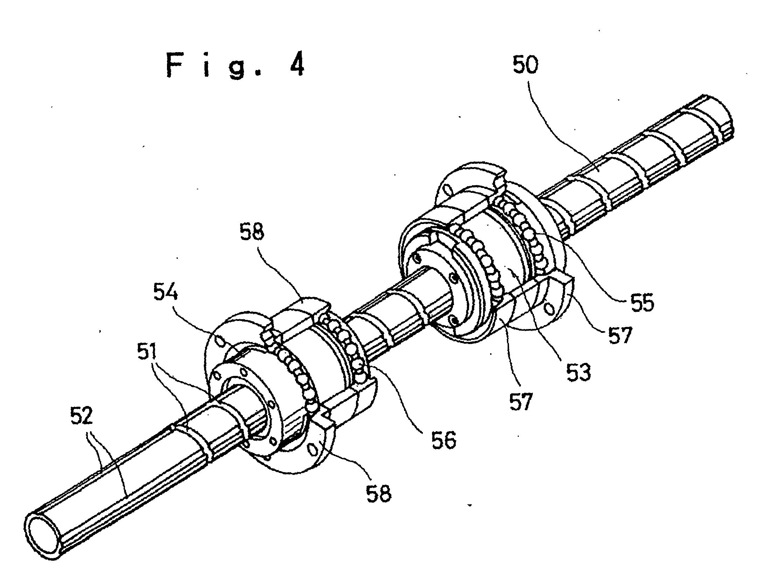

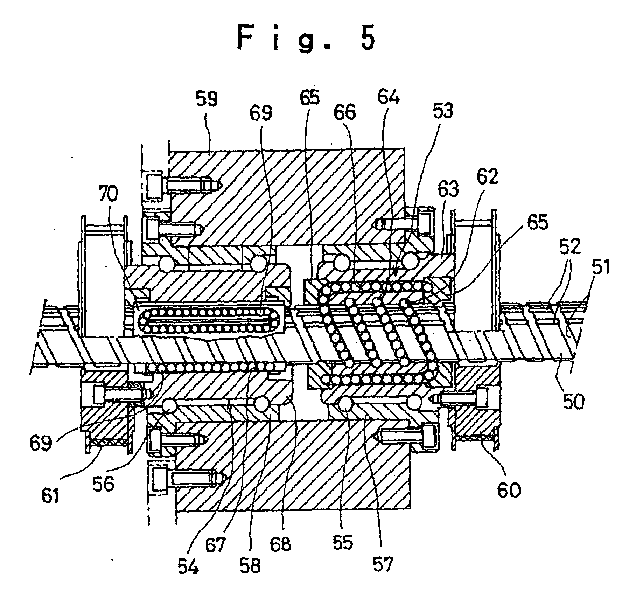

Fig. 4 and Fig. 5 are diagrams that show embodiments of a robot arm that applies the present invention.

A ball screw spline and a pair of motors constitute the robot arm. Stroking, rotational, and spiraling motions can be performed on the output shaft as an arm by combining rotation and stopping of the pair of motors.

As shown in Fig. 4, the ball screw spline is formed by overlapping a helical ball screw groove 51 and a ball spline groove 52 that extends in an axial direction in an outer circumferential surface of one output shaft 50. A ball screw nut 53 threadedly engages with the ball screw groove 51, while a ball spline nut 54 fits into the ball spline groove 52. The ball screw spline is designed such that the output shaft 50 strokes in an axial direction or rotates by selectively stopping and rotating the ball screw nut 53 and the ball spline nut 54. Support bearings 57 and 58 are therefore assembled onto outer circumferential surfaces of the nuts 53 and 54 through a large number of balls 56, 56, respectively, so that the ball screw nut 53 and the ball spline nut 54 can rotate freely with respect to a housing to which they are attached.

The ball screw spline is attached to the housing for use as shown in Fig. 5. In other words, the support bearings 57 and 58 of the ball screw nut 53 and the ball spline nut 54, respectively, are fixed to a housing 59. The nuts 53 and 54 are supported so as to be free to rotate with respect to the housing 59. Further, pulleys 60 and 61 are fixed to an end portion of the ball screw nut 53 and an end portion of the ball spline nut 54, respectively. Rotational force from a motor (not shown) is transmitted to the nuts 53 and 54 by timing belts that are hung around the pulleys 60 and 61.

The ball screw nut 53 used here includes a nut main body 63 in which a helical load ball groove 62 that opposes the ball screw groove 51 of the output shaft 50 is formed in an inner circumferential surface of the nut main body 63, a pair of end caps 65 that are fixed to both end portions of the nut main body 63 and assist endless circulation of balls 64, and a large number of the balls 64 that are inserted between the ball screw groove 51 of the output shaft 50 and the load ball groove 62 of the nut main body 63. The balls 64 roll between the ball screw groove 51 and the load ball groove 62 accompanying relative rotation between the output shaft 50 and the ball screw nut 53. Further, a ball return hole 66 is formed in the nut main body 63 along an axial direction thereof, while a direction changing groove (not shown) for sending the balls 64 into the ball return hole 66 after the balls 64 finish rolling in the load ball groove 62 of the nut main body 63 is formed in the end cap 65. The balls 64 circulate endlessly accompanying rotation of the ball screw nut 53.

The ball spline nut 54 includes a nut main body 68 in which a load ball groove 67 that opposes the ball spline groove 52 of the output shaft 50 is formed in an inner circumferential surface of the nut main body 68, a large number of balls 69 that are inserted between the ball spline groove 52 of the output shaft 50 and the load ball groove 67 of the nut main body 68, and a ball holder 70 that is fixed to a hollow portion of the nut main body 68 and guides and holds the balls 69. The ball spline nut 54 guides the output shaft 50 in the axial direction while preventing relative rotation between the output shaft 50 and the ball screw nut 54.

In addition, the output shaft 50 includes a shaft main body that is provided with a hollow portion, and a vibration absorbing member that fills the inside of the hollow portion of the shaft main body without gaps. The vibration absorbing member is formed from a ceramic material similarly to the tie rod 8 described above.

With a conventional complex motion drive apparatus constructed as described above, the ball screw nut 53 and the ball spline nut 54 are each rotated separately and independently by using two motors (not shown). By combining rotational motion of the ball screw nut 53 and rotational motion of the ball spline nut 54, stroking motion, rotational motion, and spiraling motion in which stroke and rotational motions are combined, of the output shaft 50 can be obtained. For example, when the ball screw nut 53 is rotated in a state where the ball spline nut 54 is at rest, stroking motion is obtained from the output shaft 50 according to the rotation direction of the ball screw nut 53. Further, when the ball spline nut 54 is rotated in a state where the ball screw nut 53 is at rest, spiraling motion that coincides with the rotation direction of the ball spline nut 54 is obtained from the output shaft 50.

When stroking motion, rotational motion, or spiraling motion is imparted to the robot arm, the plurality of balls that are provided to the ball screw nut 53 and the ball spline nut 54 roll in the ball spline groove 52 and in the ball screw groove 51 of the output shaft 50. Accordingly, the output shaft 50 is vibrated by the rotation, and further, vibration occurs accompanying rotation of the output shaft 50 itself. When the ball screw nut 53 and the ball spline nut 54 are rotated at high speed of the like, vibration therefore remains in the output shaft 50 after positioning is performed on the output shaft 50 that has completed a predetermined motion. Robot operations in a stopped position thus cannot be performed until the vibrations attenuate, and there is a problem in that the tact time cannot be shortened.

With the robot arm of this embodiment, however, the ceramic vibration absorbing member fills the inside of the hollow portion of the output shaft 50. Accordingly, vibrations that occur in the output shaft due to ball rolling or due to high speed rotation of the output shaft itself can be attenuated at an early stage. It thus becomes possible to shorten the tact time for assembly operations and the like that use the robot arm.

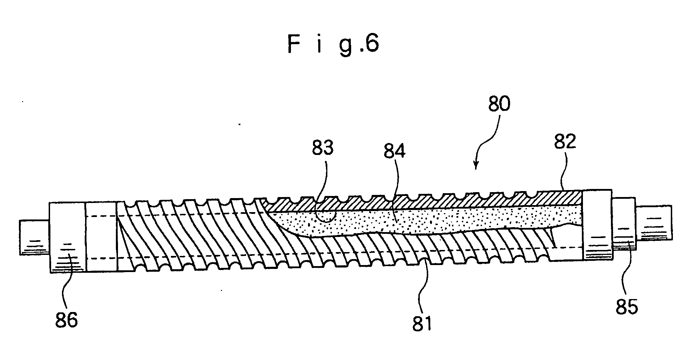

Fig. 6 is a diagram that shows a screw shaft 80 of a ball screw apparatus applying the present invention.

The tie rod 8 shown in Fig. 1 and the output shaft 50 of the robot arm shown in Fig. 4 are both formed as hollow shafts having openings at both shaft ends, and the vibration absorbing member is filled into the hollow portions from the openings at both end portions. However, it is necessary to mount bearings that support rotation of a screw shaft at both shaft ends of the screw shaft of the ball screw apparatus. Further, it is necessary to mount couplings for transmitting rotation of a motor to the screw shaft. There are thus many cases where the shaft ends must be machined into certain shapes according to intended applications.

Therefore, with the screw shaft 80 shown in Fig. 6, a vibration absorbing member 84 is filled within a hollow portion 83 of a hollow shaft 82 in which a helical ball rolling groove 81 is formed in an outer circumferential surface of the hollow shaft 82. Terminal portions 85 and 86 that have been machined into a predetermined shape are then bonded to openings at both ends of the hollow shaft 82, thus blocking the openings. Friction welding is used in bonding the terminal portions 85 and 86 to the shaft ends of the hollow shaft 82. Specifically, in a state where the shaft centers of the hollow shaft 82 and the terminal portions 85 and 86 are made to coincide, the hollow shaft 82 is fixed, while the terminal end portions 85 and 86 are rotated at high speed, causing the terminal portions 85 and 86 to be pressure welded to the axial end surfaces of the hollow shaft 82.

The terminal portions 85 and 86 can thus be provided to both shaft ends of the hollow shaft 82 that is filled with the vibration absorbing member 84 made from a ceramic material. It becomes possible to produce the screw shaft 80 having a large damping ratio with respect to vibration.

### Industrial Applicability

As explained above, according to the shaft member of the present invention that is provided with a vibration damping function, it is possible to positively attenuate vibrations acting on a shaft member, and therefore to suppress noise generation as much as possible, by filling the vibration absorbing member made from a ceramic material within the hollow portion of the shaft member without leaving any gaps.

## Claims

1. A shaft member **characterized by** comprising a shaft main body made of metal and provided with a hollow portion, and a ceramic material serving as a vibration absorbing member and filling the hollow portion with no gaps.

2. A shaft member according to claim 1, **characterized in that** the ceramic material is filled within the hollow portion of the shaft member in a powder, granular, or fluid state, and formed within the hollow portion into a shape in conformity with the hollow portion.

3. A shaft member according to claim 1, **characterized in that** the ceramic material is a hydraulic composition having a hydraulic powder and a non-hydraulic powder as its main components.

4. A shaft member according to claim 1, **characterized in that** opening portions at both ends of the shaft main body are closed by terminal portions that are bonded to the opening portions, sealing the vibration absorbing member within the hollow portion of the shaft member.
